# EUROPEAN PATENT SPECIFICATION

(11) **EP 1 151 205 B1**
(45) Date of publication and mention of the grant of the patent: **14.08.2013**
(21) Application number: 99964138.4
(22) Date of filing: 07.12.1999
(51) Int. Cl.: F16B 37/06, C23C 22/48, B23K 9/20, B23K 35/02

(54) **IMPROVED WELDABLE ALUMINUM STUD**
VERBESSERTER, SCHWEISSBARER ALUMINIUMBOLZEN
GOUJON EN ALUMINIUM AMELIORE POUVANT ETRE SOUDE

(30) Priority: 08.12.1998 DE 19856613
(43) Date of publication of application: 07.11.2001
(73) Proprietor: Newfrey LLC, Newark, Delaware 19711 (US)
(72) Inventor: SCHMITT, Klaus, G., D-35190 Giessen (DE); KRENGEL, Michael, D-61381 Friedrichsdorf (DE)
(74) Representative: Haar, Lucas Heinz Jörn
(86) International application number: PCT/US1999/028950
(87) International publication number: WO 2000/034672

(56) References cited:
- DE-A- 4 401 881
- GB-A- 912 137
- US-A- 2 858 414
- US-A- 4 684 304
- US-A- 5 584 946
- US-A- 5 584 946
- US-A- 5 618 491

## Description

The invention relates generally to weldable materials and more particularly to weldable aluminum or aluminum alloy studs having a titanium containing material on at least a portion of a surface thereof, and methods for attaching the same.

### BACKGROUND OF THE INVENTION

Weld-on parts are used in many areas of industrial manufacture. They enable metal connections without making holes and form a link between a basic structure and a component which is to be fastened. For example, a weld stud can serve to fasten pipe conduits, push buttons, plastic nuts or cable clips. Weld-on parts (e.g., studs) made of aluminum or aluminum alloys are known which can be welded to a basic part (e.g., a piece of sheet metal) which is also made of aluminum or aluminum alloys.

A weld stud of the kind referred to in the preamble of claim 1 is disclosed in DE-A-44 01 881. This weld stud is made of aluminum and has a conical welding face to be welded to a support.

US-A-2858414 discloses a weld stud made of steel which is covered with a continuous coating of aluminum uniformly covering all surfaces of the stud and providing an electrically conductive flux material available for continuous supply to melted stud metal. During welding the aluminum coating prevents formation of undesirable oxides and aids in the formation of weld metal having fine-grain structure and having sound porosity-free characteristics.

Under normal circumstances, freshly exposed aluminum in the presence of air immediately begins to oxidize. The oxide generally forms a layer over the entire surface and continues to grow thicker with the passage of time. The oxide layer is hard, adhesive, transparent, and up to several nanometers thick. In addition, in many circumstances, the thickness of the oxide layer may vary from spot to spot. The oxide layer is largely insoluble in a pH range between 4.5 and 8.5. Thus, the oxide layer provides the part with protection against corrosion. However; the oxide layer does, in some circumstances, adversely affect further processing steps to which the welded part may be subjected.

While this condition applies equally to sheet aluminum and to aluminum studs, the process of manufacturing aluminum studs by cold working the metal makes the condition even worse because, after cold working, the surface may be comprised of areas of freshly exposed aluminum interspersed with different areas having varying oxide layer thicknesses. Thus, in the finished stud, the thickness of the oxide layer is random and variable.

This condition causes problems during the welding of the studs to aluminum sheets because the energy required to release electrons from the oxide is lower than the energy to release electrons from bare aluminum. For example, in arc welding a stud, the arc may initiate at the center point of a rounded weld head but, after some initial melting, the arc might jump or "blow" to an adjacent region, such as an area having a thick oxide layer. If this adjacent region is seriously off-center, the result may be an unsatisfactory weld.

Therefore, there exists a need for aluminum studs that have a relatively consistent oxide layer which is capable of being satisfactorily welded to a surface, without the occurrence of arc jumping or blowing. There also exists a need for methods of producing such aluminum studs.

Further, US-A-584946 discloses a method of pretreating aluminum or aluminum alloy surfaces before application of a permanent corrosion-protective conversion coating treatment, in particular before phosphating in acidic phosphating baths containing zinc, a chromating treatment or a chromate free treatment. According to this method the surfaces are brought into contact with acidic aqueous treatment solutions containing complex fluorides of the elements boron, silicon, titanium, zirconium, or hafnium, alone or in mixtures with each other. Following the pretreatment the aluminum or aluminum alloy parts may, after shaping if necessary, be joined by adhesive bonding and/or electrical resistance welding to each other or to parts made of steel, zinc plated and/or zinc alloy plated steel and/or aluminum or aluminum alloy plated steel.

### SUMMARY OF THE INVENTION

It accordingly is an object of the present invention to provide an aluminum stud that has improved weldability.

It is another object of the present invention to provide an aluminum stud having a titanium containing material on at least a portion of a surface thereof.

It is another object of the present invention to provide a method for producing an aluminum stud that has improved weldability:
It is another object of the present invention to provide a method for producing an aluminum stud having a titanium material on at least a portion of a surface thereof.

In order to overcome the aforementioned disadvantages and achieve many of the aforementioned objects, the present invention provides a weld stud attachable to a substrate via an arc welding process, the weld stud comprising a shank and a head extending along one end of the shank and forming a welding face, which comes into contact during arc welding with the substrate, wherein the weld stud is comprised of aluminum or an aluminum alloy, and at least the welding face has a layer of titanium aluminum oxide. The layer of titanium aluminum oxide lowers contact resistance between the weld stud and the substrate during a welding procedure.

The present invention also provides a method for attaching a weld stud to a substrate via an arc welding process, the weld stud comprising a shank and a head extending along one end of the shank and forming a welding face, wherein the weld stud is comprised of aluminum or an aluminum alloy, the method comprising the steps of providing at least the welding face with a layer of titanium aluminum oxide, and arc welding the weld stud to the substrate. The method further includes the steps of: (1) providing an acidic solution containing titanium ions, and (2) contacting the weld stud with the solution for a sufficient period of time to permit the titanium containing material to be applied in uniform thickness to the weld stud; wherein the layer of titanium aluminum oxide lowers contact resistance during a welding procedure.

A more complete appreciation of the present invention and its scope can be obtained from an understanding the accompanying drawings, which are briefly summarized below, the followed detailed description of the invention, and the appended claims.

### BRIEF DESCRIPTION OF THE DRAWINGS

Fig. 1 is a partial cross-sectional view of a weld stud, in accordance with one aspect of the present invention; and
Fig. 2 shows an elevational view of a weld stud having a threaded portion; in accordance with one aspect of the present invention.

The same reference numerals refer to the same parts throughout the various Figures.

### DETAILED DESCRIPTION OF THE INVENTION

Initially, the weld-on part is pre-treated via known etching techniques to strip away aluminum oxides and thereby expose an aluminum or aluminum alloy surface. The titanium containing material is formed upon exposed aluminum or aluminum alloy portion of the weld-on part by immersing the part in an acidic solution including a concentration of titanium ions and, preferably, a chromium free acidic solution containing titanium ions. By way of non-limiting example, one suitable acidic solution believed to contain a sufficient quantity of titanium ions, initially or through sequential addition during the application step, is known as ALODINE 2040, which is commercially available from Henkel Surface Technologies (Madison Heights, Michigan). The acidic solution utilized should provide a caustic passivation for the aluminum surface to be treated.

To prepare an ALODINE 2040 solution for use in accordance with the teachings of the present invention, 10-30 liters (preferably 15-20 liters) of the commercially available solution is mixed with a sufficient quantity of demineralized water to form a 1000 liter bath. At the above described ratio, the resulting bath should have a pH value of 1.25.

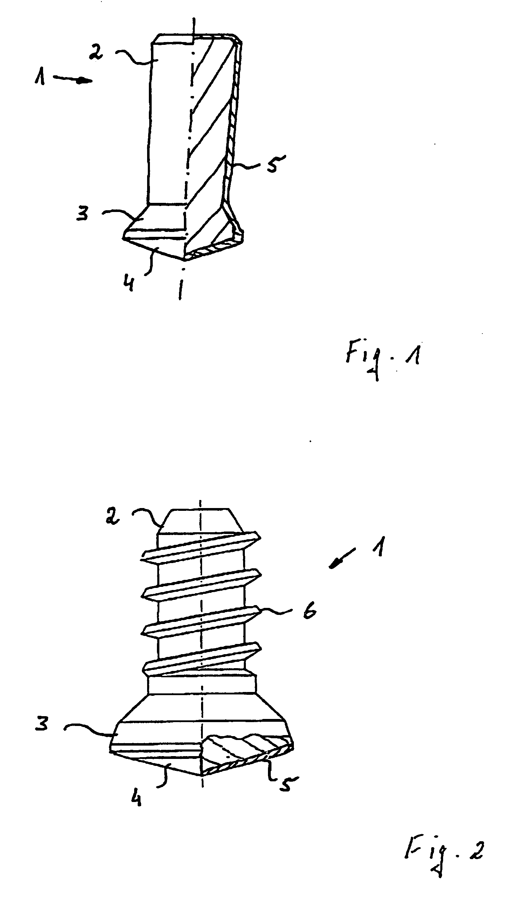

As noted above, the weld-on part is preferably a weld stud such as that shown in Figs. 1 and 2, made of aluminum or an aluminum alloy. The weld stud 1 has a shank 2 and a head 3 extending along one end of the shank. Preferably the head 3 has a conically tapered portion which forms a welding face 4.

To provide the weld-on part with a titanium containing material, the weld-on part is dipped or otherwise coated at a temperature of about 45°C in the acidic solution containing titanium ions. The treatment time, particularly if the part is dipped, is generally between 30-90 seconds, wherein the solution should have a free acid count of between about 6.1 to 18.3. Thus, as should be understood by those skilled in the art, the acidic solution is controlled by the determination of the free acid count as well as via a measure of the dissolved aluminum. For each 1.0 decrease in the free acid count, additional solution should be added to the bath.

Once at least the welding face of the weld stud is provided with the titanium containing material, contact resistance between the weld-on part, a pin and the supporting structure or substrate is reduced. Providing the layer in the region of the welding face has a positive influence on the welding process. In particular, a qualitatively high grade welded connection is achieved, enabling the energy required to weld the pin to be reduced.

It is also preferred that the titanium containing material be of a sufficient thickness to prevent the formation of aluminum oxide on the weld-on part. As noted above, the thickness should be on the order of several nanometers.

Without being bound to a particular theory of the operation of the present invention, it is believed that the ALODINE 2040 causes a relatively thin and uniform thickness layer of titanium aluminum oxide crystals to be formed on the surface of the weld-on part. Although the titanium aluminum oxide layer may grow with time, which is generally undesirable, the rate of growth is much lower than for non-passivated aluminum, and the thickness of the titanium aluminum oxide layer remains relatively consistent.

The weld stud 1 is generally connected by means of arc welding to a structure or substrate (not shown) such as a sheet of a desired thickness. For example, the weld studs may be adhered to sheets as thin as 0.8 mm on average. Preferably, the sheet will also be made of aluminum or an aluminum alloy. By way of non-limiting example, the sheet structure may be an autobody panel for a motor vehicle.

Referring to Fig. 2, there is shown a second embodiment of a weld stud 1 having a shank 2. However, in this embodiment, a Christmas-tree shaped thread 6 is formed on the shank 2. A welding head 3 is formed at a free end of the shank 2. The welding head 3 has a welding face 4, which comes into contact during arc welding with a substrate (not shown), such as an aluminum or aluminum alloy piece of sheet metal. The welding face 4 is provided with a layer 5 of a titanium containing material.

The foregoing description is considered illustrative only of the principles of the invention. Furthermore, since numerous modifications and changes will readily occur to those skilled in the art, it is not desired to limit the invention to the exact construction and process shown as described above. Accordingly, all suitable modifications and equivalents may be resorted to falling within the scope of the invention as defined by the claims which follow.

## Claims

1. A weld stud (1) attachable to a substrate via an arc welding process, the weld stud (1) comprising a shank (2) and a head (3) extending along one end of the shank (2) and forming a welding face (4), which comes into contact during arc welding with the substrate, and being comprised of aluminum or an aluminum alloy, **characterized in that** at least the welding face (4) has a uniform thickness layer (5) of titanium aluminum oxide.

2. The weld stud according to Claim 1, wherein the layer (5) is formed by contacting the welding face (4) with an acidic solution containing titanium ions. '

3. The weld stud according to Claim 2, wherein the acidic solution is a passivating solution.

4. The weld stud according to Claim 2, wherein the acidic solution is chromium-free.

5. The weld stud according to Claim 2, wherein said acidic solution includes ALODINE 2040.

6. The weld stud according to Claim 1, wherein the welding stud (1) is applied to a substrate having an average thickness of as little as 0.8 mm.

7. A method for attaching a weld stud (1) comprised of aluminum or an aluminum alloy to a substrate via an arc welding process, the weld stud (1) comprising a shank (2) and a head (3) extending along one end of the shank (2) and forming a welding face (4), **characterized by** the steps of providing at least the welding face (4) with a uniform thickness layer (5) of titanium aluminum oxide, and arc welding the weld stud (1) to the substrate.

8. The method of claim 7 further comprising the steps of:
providing an acidic solution containing titanium ions; and
contacting the welding face (4) with the acidic solution for a sufficient period of time to permit the application of the uniform thickness layer of titanium aluminum oxide along the welding face (4) of the welding stud (1).

9. The method according to Claim 8, wherein the acidic solution is a passivating solution.

10. The method according to Claim 8, wherein the acidic solution is chromium-free.

11. The method according to Claim 8, wherein said acidic solution includes ALODINE 2040.

12. The method according to Claim 7 wherein the weld stud (1) is applied to a substrate having an average thickness of as little as 0.8 mm.

## Patentansprüche

1. Schweißbolzen (1), der mittels Lichtbogenschweißen an ein Substrat anfügbar ist, wobei der Schweißbolzen (1) einen Schaft (2) und einen Kopf (3) umfasst, der sich entlang eines Endes des Schafts (2) erstreckt und eine Anschweißfläche (4) bildet, die während des Lichtbogenschweißens mit dem Substrat in Kontakt gelangt (4) und aus Aluminium oder einer Aluminiumlegierung besteht, **dadurch gekennzeichnet, dass** wenigstens die Anschweißfläche (4) eine einheitlich dicke Schicht (5) aus Titan-Aluminiumoxid aufweist.

2. Schweißbolzen nach Anspruch 1, wobei die Schicht (5) gebildet wird, indem die Anschweißfläche (4) mit einer sauren, Titanionen enthaltenden Lösung in Kontakt gebracht wird.

3. Schweißbolzen nach Anspruch 2, wobei die saure Lösung eine passivierende Lösung ist.

4. Schweißbolzen nach Anspruch 2, wobei die saure Lösung frei von Chrom ist.

5. Schweißbolzen nach Anspruch 2, wobei die saure Lösung ALODINE 2040 enthält.

6. Schweißbolzen nach Anspruch 1, wobei der Schweißbolzen (1) an ein Substrat mit einer durchschnittlichen Dicke von so wenig wie 0,8 mm angebracht wird.

7. Verfahren zum Anbringen eines Schweißbolzens (1) bestehend aus Aluminium oder einer Aluminiumlegierung an einem Substrat mittels eines Lichtbogenschweißprozesses, wobei der Schweißbolzen (1) einen Schaft (2) und einen Kopf (3) umfasst, der sich entlang eines Endes des Schafts (2) erstreckt und eine Anschweißfläche (4) bildet, **gekennzeichnet durch** die Schritte Versehen wenigstens der Anschweißfläche mit einer einheitlich dicken Schicht (5) aus Titan-Aluminiumoxid und Lichtbogenschweißen des Schweißbolzens (1) an das Substrat.

8. Verfahren nach Anspruch 7 weiter umfassend die Schritte:
Bereitstellen einer sauren, Titanionen enthaltenden Lösung, und
in Kontakt bringen der Anschweißfläche (4) mit der sauren, Titanionen enthaltenden Lösung für eine Zeitspanne, die ausreicht, um das Aufbringen einer einheitlich dicken Schicht aus Titan-Aluminiumoxid entlang der Schweißfläche (4) des Schweißbolzens (1) zu ermöglichen.

9. Verfahren nach Anspruch 8, wobei die saure Lösung eine passivierende Lösung ist.

10. Verfahren nach Anspruch 8, wobei die saure Lösung frei von Chrom ist.

11. Verfahren nach Anspruch 8, wobei die saure Lösung ALODINE 2040 enthält.

12. Verfahren nach Anspruch 7, wobei der Schweißbolzen (1) an ein Substrat mit einer durchschnittlichen Dicke von so wenig wie 0,8 mm angebracht wird.

## Revendications

1. Goujon à souder (1) pouvant être fixé à un substrat via un processus de soudage à l'arc, le goujon à souder (1) comprenant une tige (2) et une tête (3) s'étendant le long d'une extrémité de la tige (2) et formant une face de soudage (4), qui entre en contact pendant le soudage à l'arc avec le substrat, et étant constitué d'aluminium ou d'un alliage d'aluminium, **caractérisé en ce qu'**au moins la face de soudage (4) a une couche d'épaisseur uniforme (5) d'oxyde de titane-aluminium.

2. Goujon à souder selon la revendication 1, la couche (5) étant formée par mise en contact de la face de soudage (4) avec une solution acide contenant des ions de titane.

3. Goujon à souder selon la revendication 2, la solution acide étant une solution de passivation.

4. Goujon à souder selon la revendication 2, la solution acide étant exempte de chrome.

5. Goujon à souder selon la revendication 2, ladite solution acide comprenant ALDINE 2040.

6. Goujon à souder selon la revendication 1, le goujon à souder (1) étant appliqué sur un substrat ayant une épaisseur moyenne aussi faible que 0,8 mm.

7. Procédé pour fixer un goujon à souder (1) constitué d'aluminium ou d'un alliage d'aluminium à un substrat via un processus de soudage à l'arc, le goujon à souder (1) comprenant une tige (2) et une tête (3) s'étendant le long d'une extrémité de la tige (2) et formant une face de soudage (4), **caractérisé par** les étapes de disposition sur au moins la face de soudage (4) d'une couche d'épaisseur uniforme (5) d'oxyde de titane-aluminium, et de soudage à l'arc du goujon à souder (1) au substrat.

8. Procédé de la revendication 7, comprenant en outre les étapes de :
fourniture d'une solution acide contenant des ions de titane ; et
mise en contact de la face de soudage (4) avec la solution acide pendant une durée suffisante pour permettre l'application de la couche d'épaisseur uniforme d'oxyde de titane-aluminium le long de la face de soudage (4) du goujon à souder (1).

9. Procédé selon la revendication 8, la solution acide étant une solution de passivation.

10. Procédé selon la revendication 8, la solution acide étant exempte de chrome.

11. Procédé selon la revendication 8, ladite solution acide comprenant ALODINE 2040.

12. Procédé selon la revendication 7, le goujon à souder (1) étant appliqué sur un substrat ayant une épaisseur moyenne aussi faible que 0,8 mm.
